# EUROPÄISCHE PATENTANMELDUNG

(11) **EP 2 169 340 A2**
(43) Veröffentlichungstag der Anmeldung: **31.03.2010**
(21) Anmeldenummer: 09012269.8
(22) Anmeldetag: 28.09.2009
(51) Int. Cl.: F28F 21/06, B29C 45/00, C08L 23/10, B29L 31/18, B29K 23/00, B29K 105/16, B29L 31/30

(54) **Herstellung von Motorkühlungs- und/oder Klimaanlagenelementen für Kraftfahrzeuge mit Polypropylen-Glasfaser-Compounds**

(30) Priorität: 26.09.2008 DE 102008049276
(71) Anmelder: Behr GmbH & Co. KG, 70469 Stuttgart (DE)
(72) Erfinder: Brehm, Holger, Dr. nat. red., 71729 Erdmannhausen (DE); Heckenberger, Thomas, Dr.-Ing., 70771 Leinfelden-Echterdingen (DE); Zwittig, Eberhard, Dipl.-Ing., 73269 Hochdorf (DE); Himmer, Thomas, Dipl.-Ing., 73326 Reichenbach (Deggingen) (DE); Jin, Fan, Dr.-Ing., 70569 Stuttgart (DE)
(74) Vertreter: Grauel, Andreas

(57) **Zusammenfassung**

Verfahren zur Herstellung eines Motorkühlungselements, **dadurch gekennzeichnet, dass** es das Bereitstellen eines Homopolymers und/oder Blockcopolymers von Polypropylen; das Pfropfen eines Haftvermittlers auf das Propylenpolymer; das Dispergieren von Glasfaser im gepfropften Polymer unter Erhalt eines Compounds; und das Spritzgießen des Compounds unter Erhalt des Motorkühlungselements umfasst.

## Beschreibung

Die vorliegende Erfindung betrifft ein Verfahren zur Herstellung von Motorkühlungselementen und/oder Klimaanlagenelementen für Kraftfahrzeuge und/oder Verteil- und Sammelkästen für Elektro- und Hybridfahrzeuge (in Form kompletter Kühler) unter Verwendung von Polyolefin-Compounds, insbesondere von Polypropylen-Glasfaser-Compounds, sowie Motorkühlungselemente und/oder Klimaanlagenelemente und/oder Verteil- und Sammelkästen für Elektro- und Hybridfahrzeuge, die aus diesen Compounds hergestellt werden. Die Motorkühlungselemente und/oder Klimaanlagenelemente und/oder Verteil- und Sammelkästen für Elektro- und Hybridfahrzeuge weisen eine niedrige Dichte und eine hohe Hydrolysebeständigkeit gegen heißes Kühlmittelmedium bei gleichzeitig guter mechanischer Beständigkeit auf.

Insbesondere in der Automobilindustrie kommen für Anwendungen im Motorkühlungsbereich und/oder Klimaanlagenbereich häufig Kunststoffbauteile zum Einsatz. Als Kunststoffe werden typischerweise Polyamide, Polyphthalamide sowie Polyphenylensulfide verwendet. Zur Verbesserung der mechanischen Eigenschaften werden diese mit Glasfaser verstärkt. Polyamide, beispielsweise auf Basis ε-Caprolactam oder Hexamethylendiamin/Dicarbonsäure, sind dabei die am häufigsten applizierten Kunststoffe. Allerdings können Polyamide bedingt durch das heiße wässrige Kühlmittel bzw. durch die Wärme in der Kühlmittelumgebung zum Hydrolyseabbau neigen. Dies kann zu einer Verringerung der Alterungsbeständigkeit und sogar zur Bauteilbeschädigung führen, was die Verwendbarkeit von Polyamiden für die Herstellung von Motorkühlungselementen und/oder Klimaanlagenelementen einschränkt- Polyamide, Polyphthalamide und Polyphenylensulfide haben darüber hinaus eine relativ hohe Dichte, die zu den relativ hohen Kosten der Produkte beiträgt, und die zu relativ schweren Bauteilen führt.

Eine Aufgabe der vorliegenden Erfindung ist es, Motorkühlungselemente und/oder Klimaanlagenelemente und/oder Verteil- und Sammelkästen für Elektro- und Hybridfahrzeuge (in Form kompletter Kühler) aus kostengünstigen Materialen bereitzustellen, die eine verbesserte Hydrolysebeständigkeit gegen Kühlmittel bzw. eine verbesserte Beständigkeit gegen die in der Kühlmittelumgebung auftretende Wärme aufweisen.

Diese Aufgabe wurde dadurch gelöst, dass auf Homopolymere und/oder Blockcopolymere des Propylens ein Haftvermittler aufgepfropft und in dieses gepfropfte Polymer Glasfaser dispergiert wird. Das entstehende Compound kann dann durch Spritzgießen zum gewünschten Motorkühlungselement und/oder Klimaanlagenelemente und/oder Verteil- und Sammelkasten für Elektro- und Hybridfahrzeuge (in Form kompletter Kühler) geformt werden.

Dem gemäß stellt die vorliegende Erfindung ein Verfahren zur Herstellung eines Motorkühlungselements und/oder Klimaanlagenelements und/oder Verteil- und Sammelkastens für Elektro- und Hybridfahrzeuge (in Form kompletter Kühler) zur Verfügung, das dadurch gekennzeichnet ist, dass es die Stufen (i) bis (iv) umfasst:
(i) Bereitstellen eines Homopolymers und/oder Blockcopolymers von Propylen;
(ii) Pfropfen eines Haftvermittlers auf das Polymer der Stufe (i);
(iii) Dispergieren von Glasfaser im Produkt der Stufe (ii) unter Erhalt eines Compounds;
(iv) Spritzgießen des Compounds der Stufe (iii).

Die durch das Verfahren hergestellten Motorkühlungselemente und/oder Klimaanlagenelemente und/oder Verteil- und Sammelkästen für Elektro- und Hybridfahrzeuge (in Form kompletter Kühler) weisen eine deutliche Verbesserung der mechanischen Eigenschaften gegenüber herkömmlichen Polypropylen und eine hohe Hydrolyse-, Wärmeform- und Alterungsbeständigkeit gegenüber einem heißen wässrigen Kühlmittelmedium auf. Gleichzeitig haben sie eine vorteilhaft niedrige Dichte, so dass die Fertigung relativ leichter Bauteile möglich ist. Da sie zudem deutlich kostengünstiger als herkömmlich verwendete Kunststoffe sind, können mit den Compounds auf Basis Polypropylen die konventionell verwendeten Kunststoffe vorteilhaft substituiert werden.

Der Begriff "Motorkühlungselement" definiert alle Bauteile, die im Motorkühlungsbereich insbesondere einer Verbrennungskraftmaschine, also beispielsweise eines Motors für Kraftfahrzeuge, verwendet werden. Vorzugsweise sind dies alle Bauteile, die geeignet sind, die im Motor entstehende Wärme abzuführen. Insbesondere sind dies Bauteile, die von wässrigem Kühlmittel durchströmt werden oder mit diesem in Kontakt kommen und Bauteile, die durch die Bewegung von Luft eine Kühlung des Motors herbeiführen können.

Vorzugsweise ist ein derartiges Motorkühlungselement ausgewählt aus der Gruppe bestehend aus Ladeluftkühlkasten, Kühlmittelkasten, Ausgleichbehälter, Thermostatgehäuse, Luftrad, Kühlmittelleitung.

Insbesondere ist das Motorkühlungselement ein Kühlmittelkasten, also ein Wasserkasten im Falle einer Kühlung mit Wasser oder einem Wasser/Glykol-Gemisch.

Der Begriff "Blockcopolymere des Propylens" definiert Polymere mit einem oder mehreren Propylenhomopolymerblöcken und einem oder mehreren Polymerblöcken aus High-Density-Polyethylen und/oder Ethylen-Propylen-Copolymer.

Dabei liegt der Anteil von High-Density-Polyethylen bzw. Ethylen-Propylen-Copolymer im Blockcopolymer vorzugsweise bis zu 50 Gew.-% bezogen auf das Polypropylen-Blockcopolymer. Besonders bevorzugt sind Propylen-EthylenCopolymere, die bis zu 25 % Ethylen enthalten.

Das für die Herstellung der Motorkühlungselemente als Ausgangsprodukt verwendete Polypropylen der Stufe (i) ist bekannt bzw. kann nach bekannten Verfahren hergestellt werden, z.B. durch Polymerisation von flüssigem Propylen unter Einwirkung von Katȧlysatoren. Katalysatoren sind vorzugsweise Ziegler-Natta-Katalysatoren wie auch Metallocene.

Die Blockcopolymere sind gleichfalls bekannt bzw. können ebenfalls nach bekannten Verfahren hergestellt werden, z.B. durch radikalisch oder ionisch induzierte Verknüpfung eines Propylenhomopolymerisats mit dem entsprechenden Polymerisat, nämlich dem High-Density-Polyethylen und/oder dem Ethylen-Propylen-Copolymer.

Das für die Herstellung der Motorkühlungselemente und/oder Klimaanlagenelemente und/oder Verteil- und Sammelkästen für Elektro- und Hybridfahrzeuge eingesetzte Polypropylen weist vorzugsweise eine isotaktische Struktur auf. Bevorzugt ist eine Taktizität größer als 65 %, besonders bevorzugt größer als 85 %. Es ist bekannt, dass die Taktizität über entsprechende Katalysatoren bei der Polymerisation von Propylen reguliert werden kann. So erhält man bei Verwendung von Ziegler-Natta-Katalysatoren weitgehend isotaktische Polymere. Auch durch Verwendung von Metallocenen kann Polypropylen mit einem hohen Grad an Isotaktizität erhalten werden.

Das Polypropylen weist vorzugsweise einen hohen Kristallinitätsgrad auf. Er liegt vorzugsweise zwischen 40 % bis 80 %. Bevorzugt ist ein Kristallinitätsgrad größer 45 %, besonders bevorzugt größer 65 %. Der Kristallinitätsgrad von Polypropylen kann durch Zugabe von Nukleierungsmittel und/oder Tempem reguliert und durch bekannte Methoden wie z.B. DSC-Messung, Dichtemessung, Röntgenbeugung, IR-Spektroskopie oder NMR bestimmt werden.

Vorliegend wird der Kristallinitätsgrad mittels Differential-Scanning-Calorimeter und Bestimmung des Verhältnisses der Schmelzenthalpie eines zu charakterisierenden Polypropylens (ΔHₘ) zu der Schmelzenthalpie eines perfekt kristallinen Polypropylens (ΔH⁰ ₘ, _{perf}) berechnet. Die Methode ist beschrieben in "Encyclopedia of Polymer Science and Engineering 4, Mark, H-F. (Ed) (1990)."

Durch Zugabe von β-Kristallit-Beschleunigem können die Kristallisationstemperaturen sowie der Kristallinitätsgrad um 5 bis 10 % erhöht werden. Dadurch wird der Kristallisationspeak schmaler und die Kristallisationsgeschwindigkeit wird deutlich erhöht.

Bevorzugte β-Kristallit-Beschleuniger sind Y-Quinacridon und N',N'-Dicyclohexyl-2,6-naphthalindicarboxamid. Das erstere wird vorzugsweise in einer Menge von 0,1 - 0,2 Gew.-% bezogen auf das Gewicht des eingesetzten Polypropylens, das letztere vorzugsweise in einer Menge von 0,05 - 0,20 Gew.-% eingesetzt. Derartige Produkte sind bekannt und kommerziel erhältlich, beispielsweise unter den Handelsbezeichnungen AL-PTBBA® bzw. Star NU-100® der Firmen Shell bzw. New Japan Chemical.

Für die vorgesehene Verwendung ist es günstig, ein Polypropylen zu verwenden, das eine hohe Schlagzähigkeit und Spannungsrissbeständigkeit aufweist. Es ist bereits bekannt, dass Polypropylen in der β-Modifikation der Kristallform derartige Eigenschaften aufweist. Polypropylen in der β-Modifikation kann durch Zusatz sogenannter Nukleierungsmittel beim Auskristallisieren von Polypropylen aus der Schmelze erhalten werden. Es ist bereits bekannt, zum Beispiel aus der EP 0 177 961, dass Polypropylen mit einem Anteil der β-Modifikation von größer als 70 % gute mechanische Eigenschaften aufweist. Der β-Anteil wird mittels Röntgenbeugung XRD ermittelt.

Durch Zusatz von Nukleierungsmittel zum Polypropylen kann die Schlagzähigkeit verdoppelt bis verzehnfacht und die Wärmeformbeständigkeit deutlich erhöht werden. Der HDT A-Wert wird dadurch um ungefähr 30 % erhöht. Der HDT A-Wert entspricht einer Biegebelastung von 1,8 MPa (ISO 75).

Vorzugsweise werden als Nukleierungsmittel verwendet: Aluminiumhydroxy-bis(4-t-butylbenzoat) (0,1 - 0,2), Dibenzylidensorbitol (0,05 - 0,3), p-Methyldibenzylidensorbitol (0,2 - 0,3), ein Natriumsalz der 2,2'-Methylen-bis(4,6-di-t-butylphenyl)phosphorsäure (0,1 - 0,2), Aluminiumhydroxy-2,2'-Methylen-bis(4,6-di-t-butylphenyl)phosphat (0,1 - 0,2), Polycyclopenten (0,1), Polyvinylhexan (0,01 - 0,1), syndiotaktisches Poly(4-methyl-1-penten) (0,1 - 0,2), Polytrimethylallylsilan (0,1 - 0,2), ein Natriumsalz der 2,2'-Ethylen-bis(4,6-di-t-butylphenyl)phosphorsäure (0,1 - 0,2). Die in den Klammern angegebenen Werte sind bevorzugt eingesetzte Mengen in Gew.-% bezogen auf das Gewicht des eingesetzten Polypropylens. Derartige Produkte sind bekannt und kommerziel erhältlich, u.a. unter den Handelsbezeichnungen AL-PTBBA®, Irgaclear®, Milad3988® der Firmen Shell, Ciba SC und Milliken Chemicals.

Die Nukleierungsmittel werden bevorzugt in einer Menge von 0,01 bis 10 Gew.-%, mehr bevorzugt in einer Menge von 0,2 bis 5,0 Gew.-% bezogen auf das verwendete Polymer eingesetzt.

Bevorzugte Nukleierungsmittel sind die genannten Salze der Phosphorsäure. Sie werden vorzugsweise in einer Menge von 0,01 bis 3 Gew.-%, mehr bevorzugt 0,01 bis 0,5 Gew.-% bezogen auf das eingesetzte Polymere eingesetzt. Bei deren Verwendung lassen sich auch vorteilhaft die Schwindungsrate im spritzgegossenen Motorkühlungselement sowie die Werkzeugtemperatur und die Zykluszeit erniedrigen. Dies geht auch einher mit einer vorteilhaften Erniedrigung der Temperatur im Spritzgießwerkzeug von ca. 20 bis 40 °C im Vergleich zu den herkömmlich verwendeten Materialien.

Demzufolge ist das Verfahren auch **dadurch gekennzeichnet, dass** der Polypropylenanteil im Homo- und/oder Blockcopolymeren
(c) einen β-kristallinen Anteil größer als 70 %
   aufweist.

Es ist weiter bevorzugt, dass das Polypropylen eine relativ hohe Molmasse aufweist. Vorzugsweise kommt ein Polypropylen mit einem Gewichtsmittel der Molmasse M_{w} von 200.000 bis 900.000 g/Mol zum Einsatz.

Demzufolge ist das Verfahren auch **dadurch gekennzeichnet, dass** der Polypropylenanteil im Homo- und/oder Blockcopolymerisat
(d) ein Gewichtsmittel der Molmasse M_{w} von 200.000 bis 900.000 g/Mol
   aufweist.
   Besonders bevorzugt ist ein Gewichtsmittel der Molmasse M_{w} von 400.000 bis 650.000 g/Mol.
   Die Polydispersität M_{w}/Mₙ, die ein Maß für die Breite der Molmassenverteilung des Polypropylens ist, ist vorzugsweise kleiner als 5. Mehr bevorzugt liegt die Polydispersität zwischen 1 und 4, besonders bevorzugt zwischen 1,5 und 3.

Molekulargewicht bzw. Molmassenverteilung werden durch Gelpermeationschromatographie bestimmt. Dabei dient Polystyrol als Referenz, wobei der Auswertung eine universelle Eichkurve zugrunde gelegt wird. Dieses Verfahren ist dem Fachmann bekannt.

In einer bevorzugten Ausführungsform ist das Verfahren **dadurch gekennzeichnet, dass** der Polypropylenanteil im Homo- und/oder Blockcopolymerisat
(c) einen β-kristallinen Anteil größer als 70 %;
(d) ein Gewichtsmittel der Molmasse M_{w} von 200.000 bis 900.000 g/Mol, bevorzugt von 400.000 bis 650.000 g/Mol;
(e) eine Polydispersität kleiner als 5, bevorzugt zwischen 1 und 4, besonders bevorzugt zwischen 1,5 und 3
   aufweist.

In einer besonders bevorzugten Ausführungsform ist das Verfahren **dadurch gekennzeichnet, dass** der Polypropylenanteil im Homo- und/oder Blockcopolymerisat
(a) vorzugsweise eine isotaktische Struktur aufweist, vorzugsweise mit einer Taktizität größer als 65 %;
(b) einen Kristallisationsgrad größer als 45 % besitzt;
(c) einen β-kristallinen Anteil größer als 70 % aufweist.
   Bevorzugt ist auch, dass der Polypropylenanteil im Homo- und/oder Blockcopolymerisat
(d) ein Gewichtsmittel der Molmasse M_{w} von 200.000 bis 900.000 g/Mol, bevorzugt zwischen 400.000 bis 650.000 g/Mol und
(e) eine Polydispersität zwischen 1 und 4
   aufweist.

Die im erfindungsgemäßen Verfahren eingesetzten Polypropylen-Homopolymere oder Polypropylen-Blockcopolymere weisen eine hohe Zähigkeit auf. Diese Zähigkeit kann zum Beispiel als Charpy-Schlagzähigkeit bestimmt werden. Die Charpy-Schlagzähigkeit wird nach ISO 179 bestimmt.

Vorzugsweise ist die Charpy-Schlagzähigkeit bei 23 °C größer als 60 kJ/m² und bei - 30 °C kleiner als 55 kJ/m².

Die Polypropylen-Homopolymere bzw. Polypropylen-Blockcopolymere weisen einen Schmelzflussindex von vorzugsweise kleiner 10 ml/10 min bei 5 kg/230 °C auf, bevorzugt von 0,2 bis 5,0 ml/10 min bei 5 kg/230 °C. Die Schmelzflussindex-Werte der Polypropylen-Blockcopolymere müssen kleiner als 15 ml/10 min bei 5 kg/230 °C, bevorzugt kleiner als 10 ml/10 min bei 5 kg/230 °C sein. Der Schmelzflussindex (MVI)-Wert wird nach ISO 1133 bestimmt.

Es ist für die zur Herstellung der Motorkühlungselemente und/oder Klimaanlagenelemente verwendeten Compounds günstig, wenn die Grenzphasen zwischen Polypropylen und der Glasfaser hohe Bindungskräfte aufweisen. Dies gewährleistet eine Langzeitresistenz gegenüber dem Kühlmittel gerade bei höherer Einsatztemperatur und bei Dauergebrauch. Es wurde gefunden, dass diese Voraussetzungen erfüllt werden, wenn die Glasfaser über einen Haftvermittler an das Polymer gebunden wird. Dazu wird zunächst gemäß Stufe (ii) der Haftvermittler auf das Polypropylen-Polymer bzw. -Copolymer gepfropft.

Vorzugsweise wird der Haftvermittler ausgewählt aus der Gruppe bestehend aus Maleinsäureanhydrid, Glycidylmethacrylat, Acrylsäure, Methacrylsäure, EthylenAcrylsäure-Copolymer, Ethylen-Methacrylsäure-Copolymer, Alkenylbernsteinsäuren.

Die Pfropfung wird vorzugsweise so durchgeführt, dass Polypropylen bzw. das Polypropylen-Copolymer aufgeschmolzen wird, zum Beispiel bei Temperaturen um 150 °C, und der Haftvermittler der entstandenen Schmelze zugefügt wird.

In einer besonders bevorzugten Ausführungsform muss der MVI-Wert des Pfropfpolymers im Bereich von 3 - 50 ml/10 min bei 2,16 kg/230 °C liegen, vorzugsweise im Bereich von 10 - 30 ml/10 min bei 2,16 kg/230 °C (nach ISO 1133).

Maleinsäureanhydrid als Haftvermittler ist besonders bevorzugt.

Der Gewichtsanteil von Maleinsäureanhydrid bezogen auf das Polyproplylen beträgt vorzugsweise 0,1 bis 5,0 %, besonders bevorzugt 0,4 bis 3,0 Gew.-%.

Der Gewichtsanteil von Maleinsäureanhydrid und Polypropylen, d.h. des gepfropften Polymers bezogen auf das Gesamtgewicht des Compounds beträgt dann vorzugsweise 0,1 bis 10 %, mehr bevorzugt 1,5 bis 5,0 %.

Werden andere Haftvermittler als Maleinsäureanhydrid eingesetzt, so können die gleichen oder ähnliche Gewichtsanteile wie im Falle von Maleinsäureanhydrid verwendet werden.

Bevorzugt kann auch als Haftvermittler Glycidylmethacrylat in Kombination mit Methacrylsäure eingesetzt werden.

In einer Ausführungsform wird ein Haftvermittler eingesetzt, dessen Gewichtsmittel der Molmasse M_{w} größer als 10.000 g/Mol ist.

Der Gewichtsanteil des mit Glycidylmethacrylat gepfropften Polymers bezogen auf das Gesamtgewicht des Compounds beträgt vorzugsweise 0,2 bis 6,5 %, mehr bevorzugt 0,3 bis 3,0 %. Der Gewichtsanteil des mit Methacrylsäure gepfropften Polymers bezogen auf das Gesamtgewicht des Compounds beträgt vorzugsweise 0,1 bis 3,5 %.

Der Schmelzflussindex-Wert des mit Maleinsäureanhydrid, Glycidylmethacrylat oder Methacrylsäure gepfropften Polypropylens liegt vorzugsweise unter 30 ml/10 min bei 5 kg/230 °C, mehr bevorzugt unter 20 ml/10 min bei 5 kg/230 °C, besonders bevorzugt unter 15 ml/10 min bei 5 kg/230 °C. Ganz besonders bevorzugt ist ein Bereich von 5 bis 10 ml/10 min bei 5 kg/230 °C.

Um eine besonders gute Bindung der Glasfaser an das gepfropfte Copolymer zu erzielen, wird die Glasfaser oberflächenbehandelt.

Vorzugsweise werden zur Oberflächenbehandlung Aminosilane oder Titansäureester eingesetzt, die dabei auf der Oberfläche der Faser verankert werden. Wird die Glasfaser nun im geschmolzenen gepfropften Polypropylen in Stufe (iii) dispergiert, so können Gruppen aus dem Haftvermittler, beispielsweise Carboxylgruppen, Anhydridgruppen oder Epoxidgruppen, mit der Aminogruppe der Glasfaser unter Bildung einer kovalenten Bindung reagieren. Dabei entsteht ein Compound umfassend das gepfropfte Polymer und die Glasfaser.

Besonders gute Ergebnisse in der mechanischen Festigkeit werden erzielt, wenn die in der Glasfaser enthaltenen Fasern eine Länge von 0,40 bis 0,50 mm aufweisen. Dieser Wert bezieht sich auf 50 % der Fasern, die in der Glasfaser enthalten sind. Der 50 %-Wert wird üblicherweise zur Längencharakterisierung von Glasfasern herangezogen.

Es ist bevorzugt, dass der Gewichtsanteil der Glasfaser bezogen auf das Gesamtgewicht des Compounds 10 bis 50 % beträgt. Besonders bevorzugt sind Typen mit einem Glasfaseranteil von etwa 25 %, etwa 30 % sowie etwa 40 %.

Vorzugsweise wird Stufe (iii) in einem Extruder durchgeführt. Das in Stufe (iii) erhaltene Compound kann anschließend einem Spritzgießwerkzeug für das Spritzgießen in Stufe (iv) zugeführt werden. Es ist aber auch möglich, das in Stufe (iii) erhaltene Produkt zu granulieren und die Granulate erst später der Stufe (iv) zuzuführen.

Die Spritzgießtemperatur liegt vorzugsweise bei ca. 210 bis 240 °C.

Hervorzuheben ist, dass die Compounds eine hohe Schmelzfestigkeit und sehr gute Fließeigenschaften während des Spritzgießverarbeitungsprozesses der Stufe (iv) zeigen.

Die Polypropylen-Compounds (PP-Compounds) erfordern keine Materialvortrocknung im Gegensatz zu Polyamid-Compounds, beispielsweise von Polyamid-Compounds auf Basis Hexamethylendiamin/Adipinsäure, die mit Glasfaser verstärkt sind, beispielsweise mit 30 Gew.-% Glasfaser. Derartige Compounds sind auch unter der Bezeichnung PA 6,6 GF30 bekannt. Dadurch kann bei Verwendung von PP-Compounds im Vergleich zu den PA-Compounds eine deutliche Energiekosteneinsparung erreicht werden.

Die PP-Compounds lassen sich im Allgemeinen leichter als PA-Compounds verarbeiten. Im Gegensatz zu PA-Compounds friert bei ihnen die Düse des Spritzgusswerkzeugs nicht so leicht ein, d.h. die Öffnung der Düse wird nicht so leicht durch aushärtendes Polymer verstopft, da sie ein besseres Fließverhalten bereits bei niedrigerer Temperatur aufweisen und die Schmelzviskosität weniger stark temperaturabhängig ist. Dadurch kann mit den PP-Compounds das Spritzgießen in einem vergleichsweise breiteren Parameterbereich durchgeführt werden. Dies resultiert in einer gleichmäßigeren Produktqualität.

Bei PA-Compounds sind Werkstoff- und somit Bauteileigenschaften in beträchtlichem Maße vom Konditionierungsgrad abhängig. Dies ist bei den PP-Compounds nicht der Fall. Eventuell kann es bei den PA-Compounds sogar zur Emission von geruchsintensiven oder störenden Substanzen kommen, was bei den PP-Compounds weitgehend vermieden wird.

Vorzugsweise werden in einer oder in mehreren der Stufen (i) bis (iv) Nukleierungsmittel, Antioxidantien, UV-Stabilisatoren, Thermostabilisatoren, Antistatika, Verarbeitungsmittel zugegeben, die die Verarbeitung in Stufe (iv) durch Spritzgießen vereinfachen bzw. das spritzgegossene Motorkühlungselement weiter stabilisieren.

Antioxidantien sind vorzugsweise Phenole. Die Zugabemenge beträgt vorzugsweise bis zu 2 Gew.-% bezogen auf das Gesamtgewicht des Compounds, besonders bevorzugt 0,07 bis 0,5 Gew.-%.

Thermostabilisatoren sind vorzugsweise Phosphite und/oder Phosphonite. Die Zugabemenge beträgt vorzugsweise bis zu 2 Gew.-% bezogen auf das Gesamtgewicht des Compounds, besonders bevorzugt 0,07 bis 0,5 Gew.-%.

Geeignete Produkte sind beispielsweise unter der Handelsbezeichnung IRGANOX® 1330, IRGANOX® PS 800 und /oder IRGANOX® PS 802 und/oder IRGAFOS® 168 der Firma Ciba Speciality Chemicals bekannt.

Auch können Schwefelverbindungen als Antioxidantien bzw. Wärmestabilisatoren zugesetzt werden. Die Zugabemenge beträgt vorzugsweise bis zu 2 Gew.-% bezogen auf das Gesamtgewicht des Compounds, besonders bevorzugt 0,07 bis 0,5 Gew.-%.

Antioxidantien auf Basis aromatischer Amine können in einer Menge von vorzugsweise bis zu 2 Gew.-% bezogen auf das Gesamtgewicht des Compounds, besonders bevorzugt 0,1 bis 0,5 Gew.-%, zugesetzt werden.

Es ist auch möglich, Gemische obiger Verbindungen zuzusetzen. Derartige Verbindungen sind aus dem Stand der Technik bekannt.

Den Compounds kann auch ein Stabilisatorsystem zugesetzt werden, das die Beständigkeit der Compounds gegen eine Extraktion durch das im Kühler verwendete Wasser-Glysantin®-Gemisch bei hohen Temperaturen weiter verbessert. Dadurch werden die mechanischen Eigenschaften bei Wasserkontakt in Verbindung mit hoher Temperatur stabilisiert.

Als Stabilisatoren werden vorzugsweise aromatische Polycarbodiimide in einer Menge von vorzugsweise 0,5 - 2,5 Gew.-% und/oder 3,4-Dimethyldibenzylidensorbitol in einer Menge von vorzugsweise 0,5 - 5 Gew.-%, jeweils bezogen auf das Gewicht des verwendeten Polypropylens, eingesetzt. Derartige Produkte sind bekannt und kommerziel erhältlich, beispielsweise unter der Handelsbezeichnung Stabaxol® der Firma RheinChemie.

Die PP-Compounds weisen eine sehr gute Wärmeformbeständigkeit auf. Der HDT A-Wert ist größer als 130 °C, vorzugsweise größer als 160 °C. Der HDT A-Wert entspricht einer Biegebelastung von 1,8 MPa (ISO 75).

Für die Freigabe eines Wasserkastens benötigt man vorzugsweise mehrere Tests wie z.B. den Druckwechseltest, der mit einem Wasser/Glysaritin®-Gemisch ausgeführt wird. Er erfolgt bei einer Temperatur von 130 °C und einem Druckwechsel von 0,1 bar bis 2,4 bar, wobei die Druckwechselfrequenz 1,0 ± 0,5 Hz beträgt.

Wenn beispielsweise im Wasserkasten die Polymerketten des für die Herstellung des Wasserkastens verwendeten Polymers unter zu hohen inneren Spannungen stehen, z.B. wenn die Spritzgussbedingungen nicht ausreichend optimiert wurden, kann die Polymerkette der Druckwechselbelastung nicht folgen mit der Konsequenz, dass es zu Mikrorissen kommen kann. Diese Mikrorisse können insbesondere unter schnellen Druckwechsel- und Temperaturbelastungen sowie nach bestimmten Lastwechselzyklen an mechanisch belasteten Stellen des Wasserkastens auftreten.

Um die Entstehung von Mikrorissen zu minimieren oder gar zu verhindern, sollten folgende Kriterien beim Spritzgießen eingehalten werden:
Es sollte sichergestellt werden, dass die Zugabemenge der als Additive verwendeten relativ niedermolekularen Verbindungen (z.B. Gleitmittel, Stabilisatoren) unter 0,5 Gew.-% liegt (bezogen auf die Gewichtsmenge des Compounds).
Derartige Additive mit relativ niedrigem Molekulargewicht weisen vorzugsweise ein Molekuargewicht auf, das kleiner als 2.000 g/Mol ist, weiter bevorzugt kleiner als 1.000 g/Mol oder auch kleiner als 500 g/Mol.
Auch sollte die Molmasse und die Molmassenverteilung des reinen Polypropylens (PP) in einem optimierten Bereich liegen. Beispielsweise sollte das Molekulargewicht der PP-Matrix in einem PP GF 30 Homo-Typ (Homopolypropylen mit 30 Gew.-% Glasfaser) vorzugsweise zwischen 400.000 bis 650.000 g/mol liegen. Die Molmassenverteilung sollte vorzugsweise so eng wie möglich sein, wobei die Polydispersität vorzugsweise unter vier liegt, bevorzugt zwischen zwei bis vier.
Bei der Pfropfung von Polypropylen mit Maleinsäureanhydrid (MAH-g-PP-Typen) kann es unter der Einwirkung von Peroxiden zur Molmassenerniedrigung und zur Verbreiterung der Molmassenverteilung kommen. Bei sehr breiten Molmassenverteilungen mit Molmassen im Bereich von weniger als 10.000 g/mol kann dann beschleunigte Rissbildung eintreten.
Die Rissbildung kann im Allgemeinen dadurch reduziert werden, dass die Charpy-Kerbschlagzähigkeit durch Zusatz eines geeigneten Zähmodifizierers erhöht wird. Allerdings kann ein zu hoher Anteil an Zähmodifizierer die mechanischen Eigenschaften des Compounds verringern. Seine Zugabemenge sollte daher abgestimmt sein. Um den Verlust an mechanischen Eigenschaften zu minimieren, sollte deshalb die Molmasse ausreichend hoch und die Molmassenverteilung genügend eng sein, d.h. der MVI-Wert des geeigneten Zähmodifizierers sollte vorzugsweise im Bereich zwischen 0,1 und 20 ml/10 min bei 5 kg/190 °C, weiter bevorzugt im Bereich zwischen 0,1 und 5 ml/10 min bei 5 kg/190 °C liegen.
Geeignete Zähmodifizierer sind beispielsweise Kautschuk- oder thermoplastische Elastomertype (TPE)-Typen, wie beispielsweise Ethylen-α-Olefin-Copolymere, Propylen-Hexen-Copolymere, amorphe Poly-α-olefine oder Ethylen-Octen-Copolymere (POE), vorzugsweise reine Ethylen-Octen-Copolymere. Derartige Polyolefin-Elastomere sind beispielsweise unter der Bezeichnung Engage® 8180 und 8842 der Firma Dow Plastics bekannt.
Neben der Optimierung der Zähigkeit wird bei Zugabe des Zähmodifizierers im Allgemeinen auch die mechanische Festigkeit verbessert. Die Zugabemenge beträgt vorzugsweise 1 % - 30 %, weiter bevorzugt 5 % - 30 %, mehr bevorzugt 10 %- 15 % (Gew.-% bezogen auf das Gesamtgewicht des Compounds).
Weitere geeignete Verbindungen sind EPR (Ethylen-Propylen-Elastomere), EPDM (Ethylen-Propylen-Dien-Elastomere), EBR (Ethylen-Butylen-Copolymere), EVA (Ethylen-Vinyl-Acetat-Copolymere). Die Zugabemenge beträgt im Allgemeinen 2 % - 30 %, bevorzugt 10 % - 20 % (Gew.-% bezogen auf das Gesamtgewicht des Compounds). Der mittlere Partikeldurchmesser des Elastomers sollte vorzugsweise zwischen 0 und 5 µm, weiter bevorzugt zwischen 0,1 und 1,0 µm liegen.

Durch Compoundierung von Blends aus PP/POE, PP/SBS (SBS = Styrol-Butadien-Styrol-Blockcopolymer), PP/SEBS (SEBS = Styrol-Ethylen-Butylen-Styrol-Blockcopolymer), PP/EPDM/SBS, PP/EPDM/PE, PP/EPR/HDPE (HDPE = High-Density-Polyethylen), PP/EPDM/HDPE, PP/BR (BR = Butadien-Elastomer oder Butadien-Kautschuk) und PP/POE/HDPE kann die Kerbschlagzähigkeit in den resultierenden Compounds auf das fünf- bis achtfache erhöht werden. Dabei wird im Allgemeinen die Glasübergangstemperatur vorteilhaft erniedrigt, die Formstabilität in der Schmelze vorteilhaft erhöht und die Schwindung vorteilhaft reduziert,

Bei Verwendung von SBS als Zähmodifizierer liegt der mittlere Partikeldurchmesser des Polymers vorzugsweise zwischen 0,1 und 1.5 µm (Gew.-% bezogen auf das Gesamtgewicht des Compounds).

Werden thermoplastische Kunststofftypen wie z.B. reines HDPE, LDPE (Low-Density-Polyethylen), PVC (Polyvinylchlorid) und PA (Polyamid) als Zähmodifizierer zugegeben, beträgt die Zugabemenge vorzugsweise 5 % - 30 %, besonders bevorzugt 10 % - 20 % (Gew.-% bezogen auf das Gesamtgewicht des Compounds).

Als Zähmodifizierer können auch Blends aus PP/EPDM/Tonmineralienfüllstoffen, PP/PE/EPR/Tonmineralienfüllstoffen sowie PP/EPDM/SBS/Tonmineralienfüllstoffen verwendet werden. Die Tonmineralienfüllstoffe werden beispielsweise ausgewählt aus Calciumcarbonat, Montmorilloniten, Talkum. Bei einer Zugabemenge von 5 % - 30 %, vorzugsweise 10 % - 15 % (Gew.-% bezogen auf das Gesamtgewicht des Compounds) kann das Compound-System einen maximalen Schlagzähigkeitswert aufweisen. Gleichzeitig werden die Härte, die Bruchspannung und die Wärmeformbeständigkeit vorteilhaft erhöht.

Das erfindungsgemäße Verfahren ist auch **dadurch gekennzeichnet, dass** der Zähmodifizierer ausgewählt ist aus der Gruppe bestehend aus Ethylen-α-Olefin-Copolymer, Propylen-Hexen-Copolymer, amorphes Poly-α-Olefin, Ethylen-Octen-Copolymer (vorzugsweise reines Ethylen-Octen-Copolymer (POE)), Ethylen-Propylen-Elastomer (EPR), Ethylen-Propylen-Dien-Elastomer (EPDM), Ethylen-Butylen-Copolymer (EBR), Ethylen-Vinyl-Acetat-Copolymer (EVA); oder Blends von Polypropylen mit Ethylen-Octen-Copolymer (PP/POE), von Polypropylen mit Styrol-Butadien-Styrol-Blockoopolymer (PP/SBS), von Polypropylen mit Ethylen-Propylen-Dien-Elastomer und Styrol-Butadien-Styrol-Blockcopolymer (PP/EPDM/SBS), von Polypropylen mit Ethylen-Propylen-Dien-Elastomer und Polyethylen (PP/EPDM/PE). von Polypropylen mit Ethylen-Propylen-Elastomer und High-Density-Polyethylen (PP/EPR/HDPE), von Polypropylen mit Ethylen-Propylen-Dien-Elastomer und High-Density-Polyethylen (PP/EPDM/HDPE), von Polypropylen mit Butadien-Kautschuk (PP/BR), oder von Polypropylen mit Ethylen-Octen-Copolymer und High-Density-Polyethylen (PP/POE/HDPE).

Des Weiteren ist es vorteilhaft, den Compounds bei deren Herstellung effektive sogenannte innere und äußere Gleitmittel zugegeben, wobei die Schmelzstabilität, die Spritzverarbeitung sowie die Bindenahtfestigkeit verbessert werden kann.

Geeignete äußere Gleitmittel sind beispielsweise KYNAR FLEX@ PPA-Typen (fluorierte Polymere oder Copolymere mit einem Fluorgehalt von 60 %-65 % (Gewichtsprozent bezogen auf das Gesamtgewicht des Polymers bzw. Copolymers) der Firma Atofina. Die Zugabemenge liegt im Bereich von 0,05 % bis 0,3 % (Gew.-% bezogen auf die Gesamtmenge an herzustellendem Compound). Geeignet sind beispielsweise Copolymere des Vinylidenfluorids oder des Hexafluorpropylens. Bereits geringe Zugabemengen derartiger Verbindungen können Bindenahtprobleme, welche im Spritzgussprozess entstehen können, reduzieren und die Schmelzstabilität erhöhen. Dies erlaubt einen vorteilhaften und relativ breiten Verarbeitungsbereich bei der Spritagießverarbeitung. Zusätzlich können die Steifigkeit und die Schlagzähigkeit des Spritzgießbauteils sowie dessen Hitzebeständigkeit vorteilhaft erhöht werden.

Als weitere Verarbeitungshifsmittel können bei der Herstellung des Compounds Fluorelastomere zugestzt werden. Damit können Schmelzbruch sowie Extrusionsdruck, die Leistungsaufnahme, das Drehmoment und der Aufbau von Ablagerungen beim Einsatz unter moderaten Mischverhältnissen minimiert werden.

Zusätzlich können bei Einsatz derartiger Verbindungen bei einem Compound mit niedrigem MVI-Wert das Schmelz- und Fließverhalten deutlich verbessert werden. Weitere Vorteile können in einer verminderten geruchlichen Beeinflussung des Endprodukts, in einem verminderten Gleiten auf der Extrusionsschnecke, einem verringerten Abbau oxidationsempfindlicher Komponenten und geringeren unerwünschten Wechselwirkungen mit anderen Additiven resultieren. Die dabei entstehenden großen Fluorkautschuk-Partikel überziehen die Innenflächen der Düse rasch und können Schmelzbruch schneller auflösen.

Die Zugabemenge derartiger Fluorelastomere beträgt vorzugsweise zwischen 1 % bis 6 %, besonders bevorzugt 2 % bis 4 % (Gew.-% bezogen auf das Gesamtgewicht des Compounds).

Geeignete Elastomere sind beispielsweise Viton® FreeFlowTM Z200 und/oder Z210 und/oder Z110 der Firma Dupont Performance Elastomers S.A.

Gegenstand der Erfindung ist auch ein Motorkühlungselement **dadurch gekennzeichnet, dass** es umfasst: ein Homopolymer und/oder Blockcopolymer des Propylens; Haftvermittler, der auf das Homopolymer und/oder -Blockcopolymer aufgepfropft ist; Glasfaser, die im Homopolymer und/oder Blockcopolymer des Propylens dispergiert ist.

Ein weiterer Gegenstand der Erfindung ist auch ein Motorkühlungselement umfassend: ein Homopolymer und/oder Blockcopolymer des Propylens; Haftvermittler; Glasfaser; **dadurch gekennzeichnet, dass** es nach dem erfindungsgemäßen Verfahren herstellbar ist.

Ein weiterer Gegenstand der Erfindung ist ein Compound, **dadurch gekennzeichnet, dass** es umfasst: ein Homopolymer und/oder Blockcopolymer des Propylens; Haftvermittler, der auf das Homopolymer und/oder Blockcopolymer aufgepfropft ist; Glasfaser, die im Homopolymer und/oder Blockcopolymer des Propylens dispergiert ist; wobei der Polypropylenanteil im Homo- und/oder Blockcopolymer
(c) einen β-kristallinen Anteil größer als 70 %; und
(d) ein Gewichtsmittel der Molmasse M_{w} von 200.000 bis 900.000 g/Mol aufweist.

Ein derartiges Compound zur Herstellung von Motorkühlungselementen hat den Vorteil, dass es gegen Kühlmittelmedium auch bei hoher Einsatztemperatur von 80 bis 170 °C stabil ist; eine geringe Dichte im Vergleich zu herkömmlichen Compounds, etwa Compounds auf Polyamidbasis auf Basis von Hexamethylendiamin und Adipinsäure aufweist, und auch zu einem niedrigeren Preis verfügbar ist; eine hohe Schmelzfestigkeit und sehr gute Fließeigenschaften während des Spritzgießverarbeitungsprozesses aufweist; bereits bei einer Spritzgießtemperatur von 210 °C bis 240 °C im Gegensatz zu 280 bis 300 °C im Falle von Polyamid-Compounds auf Basis von Hexamethylendiamin und Adipinsäure verarbeitbar ist; und vor Verarbeitung im Gegensatz zu den Polyamid-Compounds nicht vorgetrocknet werden muss.

### Beispiele

### Beispiel 1:

Es wurden Compounds der folgenden Zusammensetzung hergestellt und bezüglich ihrer Dichte verglichen (DIN 1306):
Compound 1: Polypropylen-Homopolymer/MSA mit 30 Gew.-% Glasfaser (Dichte 1,12 g/cm³);
Compound 2: Polypropylen-Copolymer/MSA mit 40 Gew.-% Glasfaser (Dichte 1,22 g/cm³);
Compound 3: Polyamid aus Hexamethylendiamin/Adipinsäure mit 30 % Glasfaser (Dichte 1,37 g/cm³).

### Beispiel 2:

Die Beurteilung der Verarbeitbarkeit durch Spritzgießen erfolgte exemplarisch an Fließspiralen bei einem Spritzdruck von 1350 bar.
Compound 1: Fließweglänge 68 mm/240 °C;
Compound 2: Fließweglänge 58 mm/240 °C;
Compound 3: Fließweglänge 63 mm/280 °C.

Bei Compound 3 war bedingt durch die notwendige höhere Verarbeitungstemperatur bei Verarbeitungszyklen häufiges "Einfrieren", d.h. Festwerden der Schmelze in der Düsenöffnung der Spritzdüse festzustellen.

### Beispiel 3

Es wurden Materialproben der Compounds im Zugversuch getestet, indem Zugstäbe der Compounds in eine Zugprüfmaschine eingespannt und mit einer Zugkraft belastet wurden. Es wurden die Bruchspannung und die Bruchdehnung bestimmt. Zusätzlich wurde die Charpy-Schlagzähigkeit bestimmt.

Der erste Wert in der Tabelle bezieht sich dabei stets auf die gemessenen Werte einer nicht gealterten Probe, der zweite Wert auf die gemessenen. Werte nach Alterung. Die Alterung wurde so durchgeführt, dass die Stäbe 1000 h lang in einem Gemisch aus Wasser und Glykol im Gewichtsverhältnis 50 : 50 bei 100 °C gelagert wurden. Der Eigenschaftsverlust ausgedrückt in % wurde dann nach Alterung in Bezug auf den Ausgangszustand berechnet.

| | Compound 1 | Compound 2 | Compound 3 |
|---|---|---|---|
| Bruchspannung [MPa] | 100/96 | 76/72 | 120/96 |
| Eigenschaftsverlust [%] | 4 | 5 | 20 |
| | | | |
| Bruchdehnung [%] | 3/3 | 4,5 / 4,5 | 5 / 4,4 |
| Eigenschaftsverlust [%] | 0 | 0 | 9 |
| | | | |
| Charpy-Schlagzähigkeit [kJ/m² bei 23 °C] | 55 / 50 | 53 / 45 | 90 / 33 |
| Eigenschaftsverlust [%] | 10 | 15 | 63 |

Während die PP-Compounds im Zugversuch auch nach Alterung nur einen geringfügigen Eigenschaftsverlust aufwiesen, war dieser beim PA-Compound ausgeprägt.

## Patentansprüche

1. Verfahren zur Herstellung eines Motorkühlungselements und/oder eines Klimaanlagenelements und/oder Verteil- und Sammelkastens für Elektro- und Hybridfahrzeuge in Form kompletter Kühler, **dadurch gekennzeichnet, dass** es die Stufen (i) bis (iv) umfasst:
(i) Bereitstellen eines Homopolymers und/oder Blockcopolymers von Propylen;
(ii) Pfropfen eines Haftvermittlers auf das Polymer der Stufe (i);
(iii) Dispergieren von Glasfaser im Produkt der Stufe (ii) unter Erhalt eines Compounds;
(iv) Spritzgießen des Compounds der Stufe (iii).

2. Verfahren nach Anspruch 1, **dadurch gekennzeichnet, dass** das Motorkühlungselement und/oder Klimaanlagenelement ausgewählt ist aus der Gruppe bestehend aus Ladeluftkühlkasten, Kühlmittelkasten, Ausgleichbehälter, Thermostatgehäuse, Luftrad, Kühlmittelleitung, Kältemittelleitungen, Sammelkästen.

3. Verfahren nach Anspruch 1 oder 2, **dadurch gekennzeichnet dass** im Blockcopolymeren des Propylens ein Block aus High-Density-Polyethylen und/oder Ethylen-Propylen-Copolymer vorliegt.

4. Verfahren nach einem der vorstehenden Ansprüche, **dadurch gekennzeichnet, dass** der Polypropylenanteil im Homo- und/oder Blockcopolymer
(a) vorzugsweise eine isotaktische Struktur aufweist, vorzugsweise mit einer Taktizität größer als 65 %;
(b) einen Kristallisationsgrad größer als 45 % besitzt;
(c) einen β-kristallinen Anteil größer als 70 % aufweist.

5. Verfahren nach einem der vorstehenden Ansprüche, **dadurch gekennzeichnet, dass** der Polypropylenanteil im Homo- und/oder Blockcopolymer
(d) ein Gewichtsmittel der Molmasse M_{w} von 200.000 bis 900.000 g/Mol und
(e) eine Polydispersität M_{w}/Mₙ von 1 bis 4
aufweist.

6. Verfahren nach einem der vorstehenden Ansprüche, **dadurch gekennzeichnet,**
**dass** der Haftvermittler ausgewählt ist aus der Gruppe bestehend aus Maleinsäureanhydrid, Glycidylmethacrylat, Acrylsäure, Methacrylsäure, Ethylen-Acrylsäure-Copolymere, Ethylen-Methacrylsäure-Copolymere, Alkenylbernsteinsäuren.

7. Verfahren nach Anspruch 6, **dadurch gekennzeichnet, dass** der Haftvermittler Maleinsäureanhydrid oder eine Kombination von Glycidylmethacrylat und Methacrylsäure ist.

8. Verfahren nach Anspruch 7, **dadurch gekennzeichnet, dass** der Gewichtsanteil von Maleinsäureanhydrid bezogen auf Polypropylen 0,4 bis 3,0 % beträgt.

9. Verfahren nach Anspruch 8, **dadurch gekennzeichnet, dass** der Gewichtsanteil von Maleinsäureanhydrid und Polypropylen bezogen auf das Gesamtgewicht des Compounds 0,1 bis 10 % beträgt.

10. Verfahren nach einem der vorstehenden Ansprüche, **dadurch gekennzeichnet, dass** der Schmelzflussindex-Wert des mit Haftvermittler gepfropften Polymers der Stufe (ii) im Bereich von 3 - 50 ml/10 min bei 2,16 kg/230 °C nach ISO 1133 liegt.

11. Verfahren nach Anspruch 10, **dadurch gekennzeichnet, dass** der Schmelzflussindex-Wert im Bereich von 10 - 30 ml/10 min bei 2,16 kg/230 °C liegt.

12. Verfahren Anspruch 6, **dadurch gekennzeichnet, dass** der Haftvermittler ein Gewichtsmittel der Molmasse M_{w} größer als 10.000 g/Mol aufweist.

13. Verfahren nach einem der vorstehenden Ansprüche, **dadurch gekennzeichnet, dass** die Glasfaser Aminosilan-Gruppen oder Titansäureester umfasst.

14. Verfahren nach einem der vorstehenden Ansprüche, **dadurch gekennzeichnet, dass** 50 % der in der Glasfaser enthaltenen Fasern eine Länge von 0,40 bis 0,50 mm aufweisen.

15. Verfahren nach einem der vorstehenden Ansprüche, **dadurch gekennzeichnet, dass** der Gewichtsanteil der Glasfaser bezogen auf das Gesamtgewicht des Compounds 10 bis 50 % beträgt.
